# EUROPÄISCHE PATENTSCHRIFT

(11) **EP 0 999 373 B1**
(45) Veröffentlichungstag und Bekanntmachung des Hinweises auf die Patenterteilung: **03.09.2003**
(21) Anmeldenummer: 99122132.6
(22) Anmeldetag: 05.11.1999
(51) Int. Cl.: F16D 3/77, G01D 5/347, G01D 5/165

(54) **Winkelmesseinrichtung**
Angle measuring device
Dispositif de mesure d'angles

(30) Priorität: 06.11.1998 DE 19851330
(43) Veröffentlichungstag der Anmeldung: 10.05.2000
(73) Patentinhaber: Contelec AG, 2503 Biel/Bienne (CH)
(72) Erfinder: Wettstein, Matthias E., CH-2562 Port (CH); Schnorr, Daniel, 2502 Biel/Bienne (CH); Vifian, Roger, CH-2502 Biel/Bienne (CH)
(74) Vertreter: Jakelski, Joachim, Dr.

(56) Entgegenhaltungen:
- EP-A- 0 178 694
- EP-A- 0 229 215
- GB-A- 1 565 172
- "MEMBRANE COUPLINGS" DESIGN ENGINEERING,GB,MORGAN-GRAMPIAN LTD. LONDON,1. März 1997 (1997-03-01), Seiten 17-18, XP000657434 ISSN: 0308-8448

## Beschreibung

Die Erfindung betrifft einen Sensor mit den Merkmalen des Oberbegriffs des Anspruchs 1.

Solche Sensoren werden beispielsweise in der Medizintechnik oder auch in der Fahrzeugtechnik zur präzisen Erfassung von Winkelstellungen eingesetzt.

Ein Sensor dieser Art geht beispielsweise aus der DE-A-196 37 967 hervor.

Aus der DE-A-40 28 931 geht ein gattungsgemäßer Drehstellungsgeber mit einem ein erstes Sensorelement aufweisenden Stator und einem koaxial zu diesem drehbeweglich gelagerten, ein zweites mit dem ersten zusammenwirkendes Sensorelement aufweisenden Rotor hervor. Ein Federelement ist vorgesehen, um das Axialspiel einer den Rotor antreibenden Welle zu kompensieren.

Ein Resolver vom Drehwellentyp ist durch die EP-A-0 400 241 bekannt.

Ein Drehgeber geht ferner auch aus der DE-U-88 12 317 hervor.

Die DE-A-196 29 585 offenbart eine Winkelmesseinrichtung, bei der ein Stator mittels einer Kupplung mit einem stationären Teil einer Antriebseinrichtung verbunden ist. An der Kupplung ist ein Montageelement angeschraubt, in dem ein Klemmelement zur radialen Klemmung zwischen Kupplung und Stator vorgesehen ist.

Bei derartigen Winkelsensoren erweisen sich Hystereseeffekte als problematisch. Unter Hysterese wird dabei das Folgende verstanden: Wird der Winkelsensor in einer Drehrichtung bis zum Erreichen eines bestimmten elektrischen Wertes gedreht und die mechanische Position, bei der dieser Wert erreicht wird, festgehalten, und wird der Winkelsensor daraufhin in der entgegengesetzten Richtung gedreht, bis der gleiche elektrische Wert erreicht wird und werden schließlich die beiden mechanischen Positionen voneinander subtrahiert, so wird die Differenz der beiden elektrischen Werte als der Wert der Hysterese bezeichnet. Für einen präzisen Winkelabgriff sind derartige Hystereseeffekte sehr nachteilig. Antriebswellen, welche mit dem Sensor drehfest verbunden sind und deren Drehung erfaßt werden soll, weisen nun in vielen Fällen ein insbesondere auch axiales Spiel auf, durch welches Abgriffswerte verfälscht und derartige Hystereseeffekte verstärkt werden können.

Aufgabe der Erfindung ist es, einen Winkelsensor zu vermitteln, der bei möglichst einfacher und kostengünstiger Herstellung sowohl des gesamten Sensors, als auch seiner Einzelteile über einen langen Zeitraum ein axiales Spiel der den Rotor antreibenden Welle ohne nachteiligen Einfluß auf den Winkelabgriff zu kompensieren im Stande ist.

Diese Aufgabe wird bei einem Sensor der eingangs beschriebenen Art erfindungsgemäß durch die kennzeichnenden Merkmale des Anspruchs 1 gelöst.

Durch die ungerade Anzahl von in Axialrichtung federnd und in Umfangs- und Radialrichtung starr ausgebildeten Federelementen, die jeweils um gleiche Winkel zueinander versetzt punktsymmetrisch angeordnet und mit einem eine Wellenaufnahme bildenden Innenring sowie mit einem Aussenring über Stegverbindungen verbunden sind, wird eine besonders gute Spielkompensation des Axialspiels der den Rotor antreibenden Welle bei gleichzeitiger Verhinderung einer Verdrehung von Rotor und Welle gegeneinander ermöglicht.

Die Federelemente sind dabei so ausgestaltet, dass eine Längenveränderung der Federelemente unter Belastung durch eine vollsymmetrische Auslegung keinen Einfluss auf die mit dem Sensor zu erfassende Messgröße hat.

Eine vorteilhafte Ausführungsform sieht vor, dass die Federelemente in eines der Bauteile Stator, Rotor integriert sind, so dass einerseits gegenüber einem vergleichbaren Sensor ohne Spielkompensation keine Nachteile in bezug auf Preis, Einzelteile, Umfang, Herstellung und Montage entstehen, andererseits eine kompakte Bauform sowie ein optimaler Herstellungs- und Montageaufwand erreicht wird. Er kann vorteilhafterweise mit einem konventionellen Spritzgusswerkzeug hergestellt werden. Möglich ist es auch, einen Teil der Federelemente als integraler Bestandteil des Stators, den anderen Teil als integraler Bestandteil des Rotors auszubilden.

Hierdurch wird auch eine lange Lebensdauer und eine sehr kompakte Bauform ermöglicht.

Ein vorteilhaftes Ausführungsbeispiel sieht vor, daß drei kreissegmentartige, um jeweils 120° winkelversetzte Winkelelemente vorgesehen sind, an deren Enden jeweils die Federelemente mit dem Innenring verbindende Stegverbindungen und symmetrisch zwischen diesen jeweils wenigstens eine weitere, das Federelement mit dem Außenring verbindende Stegverbindung vorgesehen sind.

Dabei ist vorteilhafterweise vorgesehen, daß die die Federelemente mit dem Innenring verbindenden Stegverbindungen in Axialrichtung nicht, jedoch in Umfangsrichtung deformierbar ausgebildet sind, wohingegen die die Federelemente mit dem Außenring verbindenden Stegverbindung in Axialrichtung deformierbar und in Umfangs- und/oder Radialrichtung weitestgehend nicht deformierbar oder starr ausgebildet sind.

Es hat sich gezeigt, daß eine solche Anordnung und Ausbildung der Federelemente und deren Verbindung mit dem Innen- und Außenring über Stegverbindungen einen Axialspielausgleich durch Deformationen der Federelemente und teilweise auch der Stegverbindungen auf besonders vorteilhafte Weise ermöglichen.

Dabei kann vorgesehen sein, daß ein Gehäuseteil das Federelement umschließt.

Dieses Gehäuseteil kann bei einer vorteilhaften Ausführungsform durch Bajonettverschlüsse und/oder Clipverschlüsse an einer Trägerplatte befestigt sein, wobei die Trägerplatte und das Gehäuseteil den Stator bilden.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1 u.Fig.2: Explosionsdarstellungen eines erfindungsgemäßen Winkelsensors in verschiedenen Ansichten;
- Fig. 3: schematisch verschiedene perspektivische
- - Fig.6: Darstellungen von Federelementen eines erfindungsgemäßen Winkelsensors und deren Verbindung mit einem Innen- und Außenring und
- Fig. 7: eine Schnittdarstellung eines Winkelsensors.

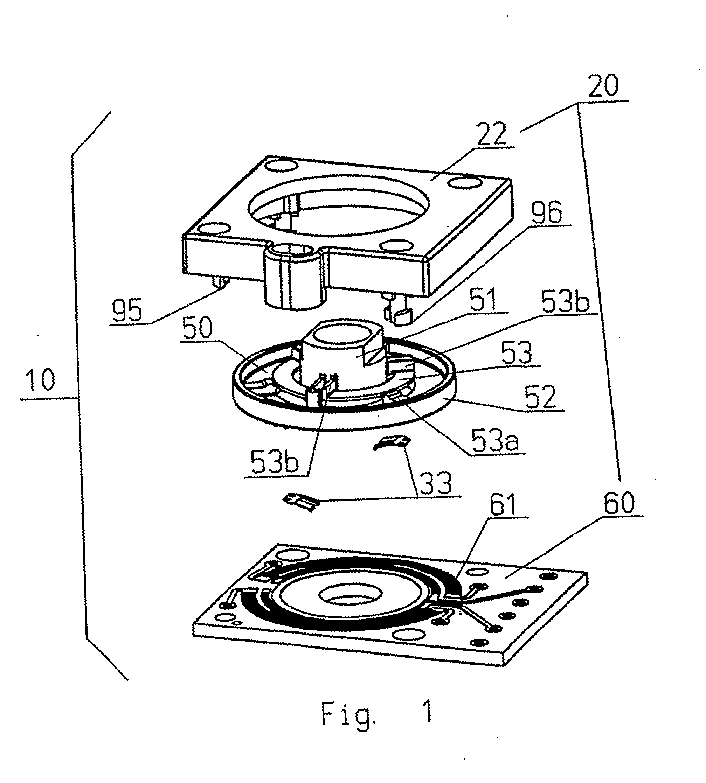

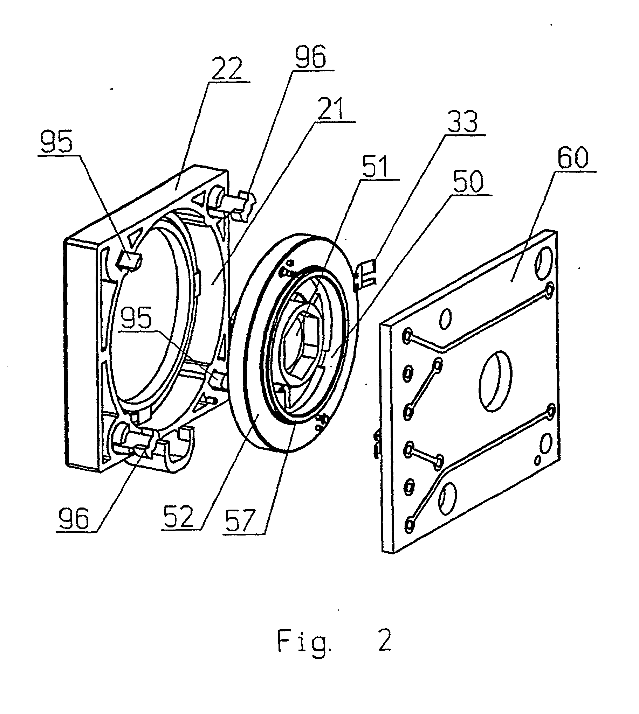

Wie insbesondere aus den Figuren 1 und 2 hervorgeht, umfaßt ein als Ganzer mit 10 bezeichneter Winkelsensor einen Stator 20 und einen Rotor 50. Der Stator 20 ist durch eine Trägerplatte 60 und ein Gehäuseteil 22 gebildet, das auf der Trägerplatte 60 beispielsweise durch Schnappverbindungen befestigt ist.

Als Teil des Rotors 50 sind mit einem als Wellenaufnahme dienenden Innenring 51 sowie mit einem als Drehlager in dem Gehäuseteil 22 dienenden Außenring 52 Federelemente 53, 54, 55 über Stegverbindungen 53a, 53b, 54a, 54b, 55a, 55b verbunden.

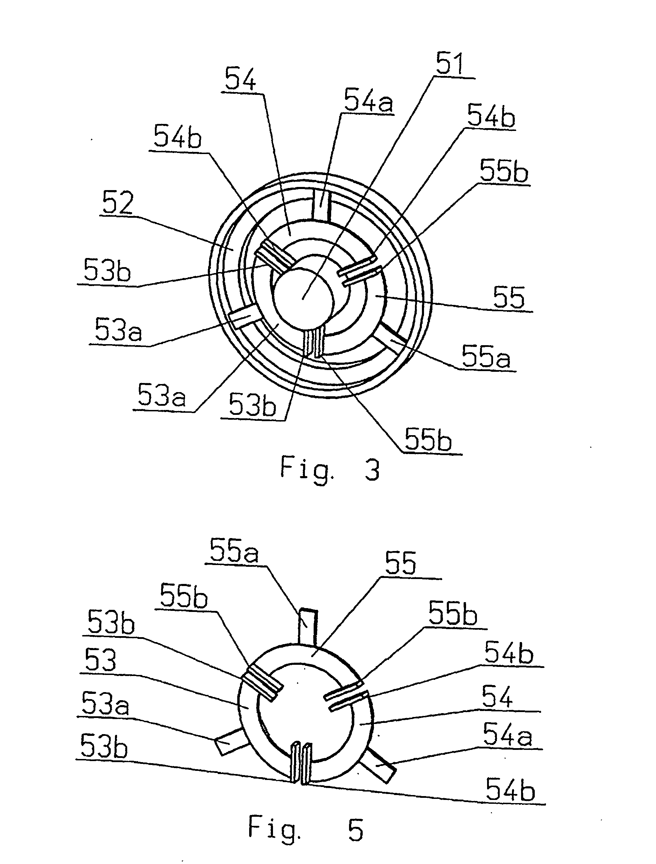

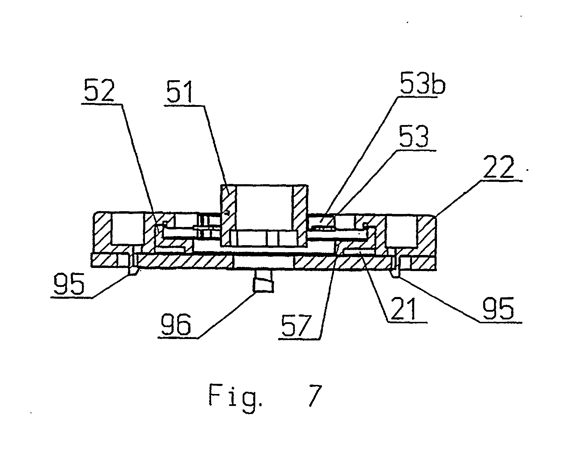

Wie insbesondere aus Fig. 3 bis Fig. 6 hervorgeht, weisen die Federelemente 53, 54, 55 im wesentlichen eine kreissegmentförmige Gestalt auf. Sie sind vorzugsweise um gleiche Winkel von 120° zueinander winkelversetzt punktsymmetrisch zu den Längsachsen des Innen- und Außenrings 51, 52 angeordnet. Mit dem Innenring 51 sind sie über die jeweils an den Enden der Federelemente 53, 54, 55 angeordneten Stegverbindungen 53b, 54b, 55b verbunden. Mit dem Außenring 52 sind sie über die Stegverbindungen 53a, 54a, 55a verbunden. Diese sind jeweils symmetrisch zwischen den endseitigen Stegverbindungen 53b, 54b, 55b an den Federelementen 53, 54, 55 angeordnet.

Die Stegverbindungen 53b, 54b, 55b, die die Federelemente 53, 54, 55 mit dem Innenring 51 verbinden, weisen eine im wesentlichen flache quaderförmige Gestalt auf. Dabei liegen sich die an benachbarten Federelementen 53, 54, 55 angeordneten Stegverbindungen 53b und 54b; 54b und 55b; 55b und 53b jeweils gegenüber. Die die Federelemente 53, 54, 55 mit dem Außenring 52 verbindenden Stegverbindungen 53a, 54a, 55a weisen ebenfalls eine im wesentlichen flache quaderförmige Gestalt auf, wobei die Quader so in Radialrichtung angeordnet sind, daß sie in Axialrichtung besonders gut und in Umfangsund Radialrichtung weitestgehend nicht deformierbar sind. Sie können aber auch völlig starr ausgebildet sein.

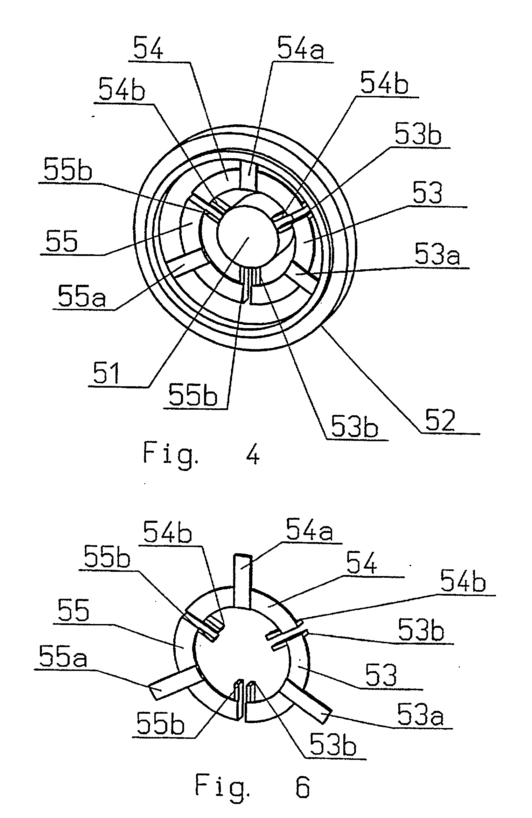

Wie insbesondere aus Fig. 3 und 4 ersichtlich, sind die quaderförmigen Stegverbindungen 53a, 54a, 55a in Radialrichtung so (hochkant stehend) angeordnet, daß durch diese Anordnung die Federelemente 53, 54, 55 bei einer Axialversetzung einer mit dem Innenring 51 verbundenen (nicht dargestellten) Welle und infolge davon einer Axialversetzung des Innenrings 51 in Axial-, aber auch geringfügig in Radial- und Umfangsrichtung deformiert werden, wobei durch die Ausbildung der Stegverbindungen 53a, 53b, 54a, 54b, 55a, 55b und der Federelemente 53, 54, 55 und ihre Anordnung aneinander eine exakte Zuordnung der Drehposition des Innenrings 51 zu dem Außenring 52 sichergestellt ist.

Wie insbesondere aus Fig. 1 und Fig. 2 hervorgeht, sind an dem Außenring 52 Sensorelemente 33 angeordnet, die auf Abgriffsbahnen 61, beispielsweise Widerstandsund/oder Kollektorbahnen der Trägerplatte 60 zum Abgreifen der Drehstellung des Rotors 50 verschieblich geführt sind.

Wie in Fig. 1, Fig. 2 und Fig. 7 dargestellt, ist der Rotor 50 in dem Gehäuseteil 22 drehbeweglich gelagert, wobei das den Rotor 50 umschließende Gehäuseteil 22 in Radialrichtung mit geringfügigem Spiel beabstandet zu einem s-förmigen Führungselement 57 des Rotors 50 (Querschnitt des Außenrings 52) angeordnet ist. Auf diese Weise können geringfügige Radialbewegungen des Rotors 50 ausgeglichen werden.

Der gesamte Winkelsensor 10 kann, wie beispielsweise aus Fig. 1 und Fig. 2 besonders deutlich hervorgeht, über Schnappverbindungen 95 oder Bajonettverschlüsse 96 beispielsweise auf einer (nicht dargestellten) Leiterplatte befestigt werden.

Durch den obenbeschriebenen Winkelsensor 10 ist eine drehsteife Übertragung des Drehmoments gewährleistet, wobei der Rotor 50 starr, beispielsweise über eine form- oder kraftschlüssige Verbindung mit einer (nicht dargestellten) Welle verbunden ist und so gelagert ist, daß die an dem Rotor 50 befestigten Sensorelemente 33 in immer gleichem radialem Abstand zum Stator 20 angeordnet sind. Eine Spielkompensation des Axialspiels bei gleichzeitiger präziser Führung der den Rotor 50 antreibenden Welle wird durch die Federelemente 53, 54, 55 und die Stegverbindungen 53a, 53b, 54a, 54b, 55a, 55b dadurch erzielt, daß das innere Ringelement 51 in axialer, nicht aber in radialer und in Umfangsrichtung beweglich ist. Hierdurch wird ein präziser Abgriff der auf dem äußeren Ringelement 52 angeordneten Sensorelemente 33 gegenüber dem Stator 20 erzielt.

Es hat sich dabei in Versuchen gezeigt, daß eine ungerade Anzahl der Federelemente 53, 54, 55, beispielsweise wie oben dargestellt drei Federelemente 53, 54, 55 von besonderem Vorteil hinsichtlich des Axialspielausgleichs ist, da eine geringfügige Schrägstellung der Ringelemente 51, 52 zueinander und damit der Achse der Welle zu der Achse des äußeren Ringelements 52 durch die oben beschriebene Anordnung der Federelemente 53, 54, 55 und deren Verbindung mit dem Innenring 51 und mit dem äußeren Ring 52 über die Stegverbindungen 53a, 53b, 54a, 54b, 55a, 55b ebenfalls kompensierbar ist.

## Patentansprüche

1. Sensor mit einem ein erstes Sensorelement aufweisenden Stator (20) und einem koaxial zu diesem drehbeweglich gelagerten, ein zweites mit dem ersten zusammenwirkendes Sensorelement aufweisenden Rotor (50), wobei zum Ausgleich des Axialspiels einer den Rotor (50) antreibenden Welle wenigstens ein Federelement (53, 54, 55) vorgesehen ist, das sich einerseits an der Welle, andererseits an dem Stator (20) abstützt, **dadurch gekennzeichnet, daß** eine ungerade Anzahl von in Axialrichtung federnd und in Umfangs- und Radialrichtung starr ausgebildeten Federelementen (53, 54, 55) vorgesehen ist, die jeweils um gleiche Winkel zueinander versetzt punktsymmetrisch angeordnet und mit einem eine Wellenaufnahme bildenden Innenring (51) sowie mit einem Außenring (52) über Stegverbindungen (53a, 53b, 54a, 54b, 55a, 55b) verbunden sind.

2. Sensor nach Anspruch 1, **dadurch gekennzeichnet, dass** die Federelemente (53, 54, 55) als Teil des Rotors (50) und/oder des Stators einstückig mit diesen ausgebildet sind.

3. Sensor nach Anspruch 1 oder 2, **dadurch gekennzeichnet, daß** drei kreissegmentartige, um jeweils 120° winkelversetzt angeordnete Federelemente (53, 54, 55) vorgesehen sind, an deren Enden jeweils die Federelemente mit dem Innenring (51) verbindende Stegverbindungen (53b, 54b, 55b) und symmetrisch zwischen diesen jeweils wenigstens eine weitere, das Federelement (52, 54, 55) mit dem Außenring (52) verbindende Stegverbindung (53a, 54a, 55a) vorgesehen sind.

4. Sensor nach Anspruch 3, **dadurch gekennzeichnet, daß** die die Federelemente (53, 54, 55) mit dem Innenring (51) verbindenden Stegverbindungen (53b, 54b, 55b) in Axialrichtung nicht, jedoch in Umfangsrichtung deformierbar sind und daß die die Federelemente (53, 54, 55) mit dem Außenring (52) verbindenden Stegverbindungen (53a, 54a, 55a) in Axialrichtung deformierbar oder starr ausgebildet sind.

5. Sensor nach Anspruch 4, **dadurch gekennzeichnet, daß** ein Gehäuseteil (22) das Federelement (53, 54, 55) wenigstens teilweise umschließt.

6. Sensor nach Anspruch 5, **dadurch gekennzeichnet, daß** das Gehäuseteil (22) über eine Schnappund/oder Bajonettverbindung (95, 96) an einer Trägerplatte (60) befestigbar ist und zusammen mit der Trägerplatte (60) den Stator (20) bildet.

## Claims

1. A sensor comprising a stator (20) provided with a first sensor element, and a rotor (50) mounted so as to be rotatable co-axially with the stator (20) and provided with a second sensor element cooperating with the first, wherein, to compensate for the axial play of a shaft driving the rotor (50), at least one spring member (53, 54, 55) is provided which is supported on the shaft on one side and on the stator (20) on the other side, **characterised in that** there is provided an uneven number of spring members (53, 54, 55) which are resiliently formed in the axial direction and rigidly formed in the circumferential and radial directions and which extend over like angles in a radially symmetrical arrangement and are connected to an inner ring (50) forming a shaft mount and to an outer ring (52) by bridge connectors (53a, 53b, 54a, 54b, 55a, 55b).

2. A sensor according to claim 1, **characterised in that** the spring members (53, 54, 55) are formed as part of the rotor (50) and/or the stator so as to be integral therewith.

3. A sensor according to claim 1 or 2, **characterised in that** three spring members (53, 54, 55) are provided which are in the shape of a circular segment, each arranged angularly displaced by 120°, and at the ends of which are provided bridge connectors (53b, 54b, 55b) connecting the spring members to the inner ring (51) and, symmetrically therebetween, at least one further bridge connector (53a, 54a, 55a) connecting the spring member (53, 54, 55) to the outer ring (52).

4. A sensor according to claim 3, **characterised in that** the bridge connectors (53b, 54b, 55b) connecting the spring members (53, 54, 55) to the inner ring (51) are not deformable axially, but are deformable circumferentially, and **in that** the bridge connectors (53a, 54a, 55a) connecting the spring members (53, 54, 55) to the outer ring (52) are deformably or rigidly formed in the axial direction.

5. A sensor according to claim 4, **characterised in that** a housing part (22) at least partly surrounds the spring member (53, 54, 55).

6. A sensor according to claim 5, **characterised in that** the housing part (22) is fixable to a supporting plate (60) by a snap-locking and/or bayonet connection (95, 96) and, together with the supporting plate (60), forms the stator (20).

## Revendications

1. Capteur avec un stator (20) présentant un premier élément de capteur, et avec un rotor (50) logé dans le sens coaxial en rotation par rapport à celui-ci et présentant un deuxième élément de capteur coopérant avec le premier, avec pour la compensation du jeu axial d'un arbre entraînant le rotor (50) au moins un élément de ressort (53, 54, 55), prenant appui d'une part sur l'arbre et d'autre part sur le stator (20),
**caractérisé par**
un nombre impair d'éléments de ressort (53, 54, 55) rigides dans les sens circonférentiel et radial et élastiques dans le sens axial, qui sont respectivement disposés à symétrie ponctuelle décalés d'un même angle les uns par rapport aux autres, et qui sont reliés à l'aide de pattes (53a, 53b, 54a, 54b, 55a, 55b) à une bague intérieure (51) formant un logement d'arbre ainsi qu'à une bague extérieure (52).

2. Capteur selon la revendication 1,
**caractérisé en ce que**
les éléments de ressort (53, 54, 55) en tant que partie du rotor (50) et/ou du stator sont formés d'une seule pièce avec ceux-ci.

3. Capteur selon la revendication 1 ou 2,
**caractérisé par**
trois éléments de ressort (53, 54, 55) en forme de segments de cercle disposés respectivement décalés d'un angle de 120°, dont les extrémités composant des pattes (53b, 54b, 55b) reliant respectivement les éléments de ressort à la bague intérieure (51), ainsi qu'au moins respectivement une autre patte (53,a, 54a, 55a) disposée symétriquement entre les précédentes et reliant l'élément de ressort (52, 54, 55) à la bague extérieure (52).

4. Capteur selon la revendication 3,
**caractérisé en ce que**
les pattes (53b, 54b, 55b) reliant les éléments de ressort (53, 54, 55) à la bague intérieure (51) ne sont pas déformables dans le sens axial mais le sont dans le sens circonférentiel, et les pattes (53a, 54a, 55a) reliant les éléments de ressort (53, 54, 55) à la bague extérieure (52) sont soit déformables dans le sens axial soit rigides.

5. Capteur selon la revendication 4,
**caractérisé en ce qu'**
un élément de boîtier (22) entoure du moins partiellement l'élément de ressort (53, 54, 55).

6. Capteur selon la revendication 5,
**caractérisé en ce que**
l'élément de boîtier (22) peut être fixé sur une plaque de support (60) par assemblage à encliquetage ou à baïonnette (95, 96) et constitue, conjointement avec la plaque de support (60), le stator (20).
